# NOUVEAU FASCICULE DE BREVET EUROPEEN

(11) **EP 3 079 879 B2**
(45) Date de publication et mention de la décision concernant l'opposition: **28.12.2022**
(45) Mention de la délivrance du brevet: 04.12.2019
(21) Numéro de dépôt: 14808965.9
(22) Date de dépôt: 04.12.2014
(51) Int. Cl.: B29C 49/42, B29C 49/64, B29C 49/78, B29K 67/00, B29L 31/00

(54) **DISPOSITIF DE TRAITEMENT EN SÉRIE DE CORPS CREUX COMPORTANT UNE TIGE DE TRAITEMENT COMMANDÉE EN COULISSEMENT PAR UN ACTIONNEUR ÉLECTRIQUE ET PROCÉDÉ DE TRAITEMENT**
VORRICHTUNG ZUR SERIELLEN BEHANDLUNG VON HOHLKÖRPERN MIT EINER DURCH EIN ELEKTRISCHES STELLGLIED GLEITEND GESTEUERTEN BEHANDLUNGSSTANGE UND BEHANDLUNGSVERFAHREN
DEVICE FOR SERIAL TREATMENT OF HOLLOW BODIES COMPRISING A TREATMENT ROD SLIDINGLY CONTROLLED BY AN ELECTRIC ACTUATOR AND TREATMENT METHOD

(30) Priorité: 09.12.2013 FR 1362291
(43) Date de publication de la demande: 19.10.2016
(73) Titulaire: Sidel Participations, 76930 Octeville-sur-Mer (FR)
(72) Inventeur: FEVRE, Sébastien, F-76930 Octeville sur Mer (FR)
(74) Mandataire: Sidel Group
(86) Numéro de dépôt international: PCT/EP2014/076530
(87) Numéro de publication internationale: WO 2015/086423

(56) Documents cités:
- EP-A1- 0 528 217
- EP-A1- 1 982 920
- EP-A2- 2 176 052
- EP-A2- 2 561 972
- EP-B1- 2 161 202
- WO-A1-2008/070956
- WO-A1-2013/092879
- DE-A1- 4 305 478
- DE-A1- 10 140 906
- DE-A1-102005 031 319
- DE-A1-102006 044 904
- DE-A1-102007 035 872
- DE-A1-102010 026 166
- DE-A1-102012 104 753
- JP-A- H0 999 922
- JP-A- 2011 246 165
- US-A1- 2008 136 064
- US-A1- 2011 209 731
- US-B1- 6 984 360
- US-B2- 6 752 959
- Translation of JP H0999922 A
- Translation of JP 2011246165 A

## Description

### DOMAINE TECHNIQUE DE L'INVENTION

L'invention concerne un dispositif de traitement en série de corps creux en matériau thermoplastique comportant une tige de traitement qui est destinée à être insérée dans le corps creux, le dispositif concernant des moyens de commande en coulissement de la tige.

L'invention concerne aussi un procédé de traitement en série de préformes mettant en œuvre un tel dispositif de traitement.

### ARRIERE PLAN TECHNIQUE DE L'INVENTION

L'invention concerne plus particulièrement un dispositif de traitement en série de corps creux en matériau thermoplastique, notamment de préformes en matériau thermoplastique, comportant :
- au moins un organe de transport individuel d'un corps creux ;
- au moins une tige de traitement qui est associée audit organe de transport, la tige de traitement étant montée coulissante axialement par rapport à l'organe de transport ;
- des moyens commandés de mise en mouvement de chaque tige de traitement entre une position escamotée dans laquelle la tige de traitement est escamotée au-dessus du corps creux transporté par l'organe de transport, et une position étendue dans laquelle la tige de traitement est destinée à être insérée axialement dans le corps creux transporté en passant à travers un col dudit corps creux.

Les dispositifs de traitement de ce type permettent notamment de traiter des préformes qui sont destinées à la fabrication, par soufflage ou par étirage-soufflage, de récipients en matériau thermoplastique.

Dans la description et dans les revendications, le terme "traitement" englobe aussi bien des opérations d'intervention physique sur le corps creux, telle qu'une opération de stérilisation ou de refroidissement, que des opérations de contrôle, telle qu'une opération de mesure de la température à l'intérieur du corps creux.

Dans ce type de dispositif, les organes de transport se déplacent en défilant les uns derrière les autres le long d'un circuit fermé. Les organes de transport sont par exemple portés par une chaîne ou par un carrousel.

Les corps creux sont chargés un par un sur le dispositif dans une zone de chargement. Puis ils sont déplacés par les organes de transport le long d'un trajet. Durant leur transport les corps creux sont traités. A l'issue du trajet les corps creux sont déchargés des organes de transport les uns après les autres dans une zone de déchargement.

Lorsqu'il s'agit de préformes, les corps creux continuent leur déplacement sur d'autres dispositifs en direction d'une station de formage, tandis que les organes de transports reviennent à leur point de départ pour prendre en charge d'autres corps creux à traiter.

Dans les dispositifs de traitement déjà connus, le coulissement des tiges de traitement est commandé par une came qui est agencée le long du trajet du corps creux.

Les moyens de coulissement à came sont généralement très encombrants. Pour permettre de réduire le pas entre deux organes de transport successifs, plusieurs tiges de traitement sont montées sur un même chariot coulissant. Ainsi, toutes les tiges montées sur ledit chariot sont mises simultanément en coulissement de manière à traiter plusieurs corps creux à la fois.

Cependant, les moyens de commande du coulissement à came de permettent pas de régler rapidement et aisément la course de coulissement des tiges de traitement. Il n'est notamment pas possible de régler individuellement la course de coulissement de chaque tige en fonction de la taille de chaque corps creux pendant le fonctionnement du dispositif de traitement.

En outre, le fait que plusieurs tiges soient commandées simultanément ne permet de traiter les corps creux sur la totalité de leur trajet. En effet, en considérant une série de plusieurs corps creux successifs destinés à être traités par autant de tiges de traitement montées sur un chariot commun, les premiers corps creux de la série doivent d'abord effectuer un déplacement "à vide", c'est-à-dire sans traitement, jusqu'à ce que le dernier corps creux de la série soit chargé sur le dispositif de traitement avant que le traitement ne puisse commencer. De même le traitement s'arrête simultanément pour tous les corps creux de la série dès que le premier corps creux a atteint la zone de déchargement.

La présence de ces déplacements "à vide" augmente inutilement la durée de présence de chaque corps creux sur le dispositif de traitement.

On connaît aussi des dispositifs de traitement dans lesquels les moyens de commande du coulissement des tiges sont formés par des vérins pneumatiques qui fonctionne en "tout ou rien". La course de coulissement de chaque tige de traitement est réglée simultanément pour toutes les tiges de traitement du dispositif par le positionnement d'un élément de butée commun à tous les vérins. Ce dispositif permet de régler grossièrement la course des tiges de traitement pour différents types de corps creux.

Néanmoins, le réglage commun de la course des tiges de traitement ne permet pas d'obtenir un réglage fin permettant d'adapter précisément la course de chaque tige à la hauteur réelle de chaque corps creux. Ceci est notamment important lorsque le dispositif de traitement est agencé après un poste de chauffage des corps creux. En effet, le chauffage provoque un retrait du matériau thermoplastique constituant les corps creux. Les effets de ce retrait sur la hauteur des corps creux est de l'ordre de quelques millimètres. En outre, le retrait est disparate pour chaque préforme, et il est très complexe voire impossible de déterminer la hauteur exacte d'une préforme après son chauffage.

Or, certains traitement nécessitent un réglage fin de la course des tiges de traitement durant le fonctionnement du dispositif de traitement pour pouvoir l'adapter à la hauteur de chaque préforme prise individuellement. Une telle adaptation n'est pas réalisable par les dispositifs connus de traitement.

Le document EP2176052 décrit un traitement de préformes par allumage d'un mélange gazeux explosif. Le document US6984360 décrit une methode de stérilisation d'un récipient.

### BREF RESUME DE L'INVENTION

L'invention propose un dispositif selon la revendication 1.

Selon d'autres caractéristiques du dispositif réalisé selon les enseignements de l'invention :
- la tige de traitement comporte des moyens pour détecter lorsque son extrémité libre est à la distance déterminée du fond de la préforme ;
- la tige de traitement est formée par une buse destinée à injecter un fluide dans le corps creux ;
- la tige de traitement porte à son extrémité inférieure un moyen pour mesurer la température ;
- la tige de traitement comporte des moyens d'émission d'un rayonnement électromagnétique stérilisant, par exemple des diodes électroluminescentes émettant un rayonnement ultraviolet.

L'invention concerne aussi un procédé selon la revendication 6.

Selon d'autres caractéristiques du procédé :
- le procédé comporte des étapes préalables de mesure de la hauteur de chaque préforme chaude, chaque étape préalable de mesure d'une préforme intervenant avant le début de l'étape de traitement de ladite préforme pour permettre à l'unité électronique de commande d'arrêter la tige de traitement à la distance déterminée du fond de ladite préforme ;
- chaque étape de traitement comporte une opération de détection du fond de ladite préforme qui est réalisée pendant le coulissement de la tige de traitement vers sa position étendue pour permettre à l'unité électronique de commande d'arrêter la tige de traitement à la distance déterminée du fond de ladite préforme.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue schématique qui représente une installation de fabrication de récipients en série par formage de préformes en matériau thermoplastique, l'installation comportant un dispositif de traitement réalisé selon les enseignements de l'invention ;
- la figure 2 est une vue schématique de dessus qui représente une partie du dispositif de traitement de la figure 1 comportant des organes de transport de corps creux ;
- la figure 3 est une vue schématique en section axiale partielle de la figure 2 dans lequel une tige de traitement occupe une position escamotée ;
- la figure 4 est une vue schématique en section axiale partielle de la figure 2 dans lequel une tige de traitement occupe une position étendue ;
- la figure 5 est une vue schématique de profil qui représente des moyens de mesure de la hauteur d'une préforme ;
- la figure 6 est une vue similaire à celle de la figure 5 qui représente une tige de traitement équipée de moyens de détection de l'approche du fond de la préforme.

### DESCRIPTION DETAILLEE DES FIGURES

Dans la suite de la description, des éléments présentant une structure identique ou des fonctions analogues seront désignés par des signes de référence identiques.

Dans la suite de la description, on adoptera de manière non limitative une orientation axiale dirigée de bas en haut selon une direction parallèle à celle de l'axe de coulissement des tiges de traitement et indiquées par la flèche "A" des figures.

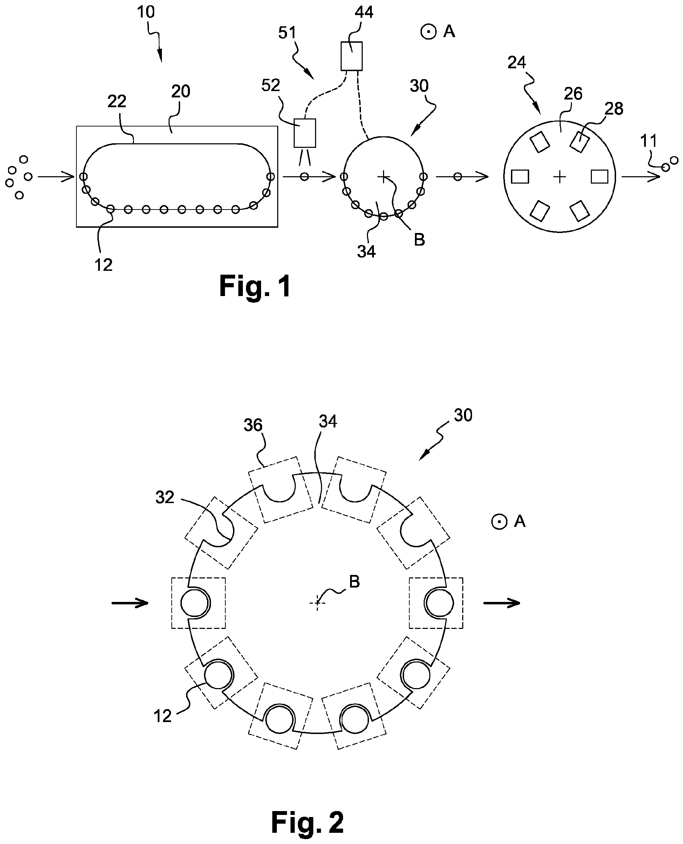

On a représenté schématiquement à la figure 1 une installation 10 de fabrication en série de récipients en matériau thermoplastique. De manière non limitative, les récipients sont ici des bouteilles et le matériau thermoplastique est formé par du polyéthylène téréphtalate, désigné par la suite sous son acronyme "PET".

Les récipients sont obtenus par formage à chaud de préformes 12 en matériau thermoplastique.

Pour la description et pour les revendications, le terme "corps creux" se rapporte à un objet creux présentant une ouverture formée par un col. Dans présente description, les corps creux sont formés par des préformes 12.

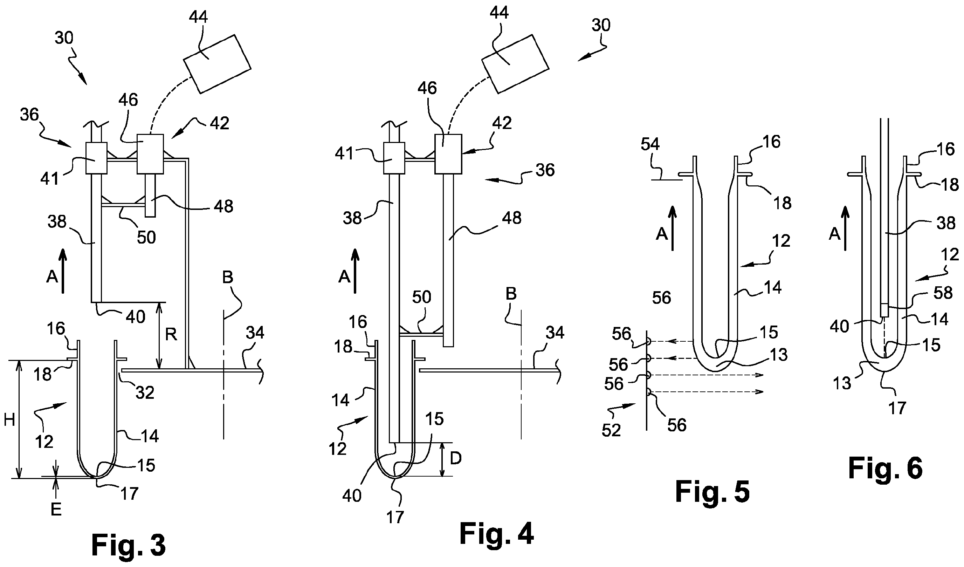

De telles préformes 12 sont obtenues généralement par injection. Comme représenté à la figure 5, elles présentent un corps 14 cylindrique à paroi tubulaire qui est fermé à l'une de ses extrémités axiales, ici inférieure, par un cul 13 et qui est prolongé à son autre extrémité, ici supérieure, par un col 16, lui aussi tubulaire.

Le col 16 délimité axialement vers le bas par une collerette 18. Le col 16 est généralement injecté de manière à posséder déjà sa forme définitive tandis que le corps 14 de la préforme 12 est appelé à subir une déformation relativement importante pour former le récipient final lors d'une opération de formage.

Le cul 13 de la préforme 12 forme ainsi une paroi présentant une face intérieure formant un fond 15 qui délimite axialement vers le bas la cavité intérieure de la préforme 12 et une face extérieure 17.

En se reportant à la figure 1, l'installation 10 comporte une station 20 de chauffage des préformes 12. A titre d'exemple non limitatif, la station 20 de chauffage est formée par un tunnel dans lequel sont agencés des moyens (non représentés) de chauffage, telles que des lampes à infrarouge ou des moyens d'émission d'un rayonnement micro-onde. Un moyen 22 de convoyage des préformes 12 est agencés de manière à faire défiler les préformes 12 le long des moyens de chauffage depuis une entrée jusqu'à une sortie du tunnel.

Le sens de défilement des préformes 12 est indiqué par les flèches de la figure 1.

En variante, la station de chauffage est formée de cavités individuelles équipées de moyens de chauffage et recevant chacune une préforme.

A leur sortie de la station 20 de chauffage, la partie à déformer des préformes 12, généralement le corps 14, est rendue malléable par chauffage au-delà d'une température de transition vitreuse, tandis que les parties à ne pas déformer, en général le col 16, sont maintenues à une température suffisamment basse pour conserver leur forme d'origine.

L'installation 10 comporte aussi une station 24 de formage des préformes 12 ainsi chauffée. La station 24 de formage est agencée en aval du poste de chauffage en référence au flux de préformes 12 dans l'installation 10.

La station 24 de formage présente ici la forme d'un carrousel 26 portant une pluralité de postes 28 de formage. Chaque poste 28 de formage est ainsi susceptible de se déplacer autour de l'axe du carrousel 26 entre un point de chargement des préformes 12 chaudes et un point de déchargement des récipients finaux avant de reprendre un nouveau cycle.

Il s'agit ici de postes 28 de formage par étirage-soufflage des préformes 12. S'agissant de postes 28 de formage par soufflage, le fluide est généralement formé par un gaz sous pression.

On comprendra cependant que l'invention est aussi applicable à d'autres types de postes de formage, notamment à des postes de formage par injection d'un liquide sous pression dans la préforme.

Lors de l'opération de formage des récipients, le carrousel 26 est animé d'un mouvement de rotation pour permettre le déplacement des préformes 12/récipients finaux depuis le point de chargement jusqu'au point de déchargement. Ainsi, une nouvelle préforme 12 peut débuter l'opération de formage tandis que la préforme 12 précédente n'a pas encore achevé son cycle de formage. Ceci permet de maintenir un rythme élevé pour la fabrication en grande série des récipients 12.

L'installation 10 de fabrication comporte aussi un dispositif 30 de traitement en série des préformes 12 qui est interposé entre la station 20 de chauffage et la station 24 de formage selon le flux des préformes 12.

Le dispositif 30 de traitement comporte au moins un organe 32 de transport individuel d'une préforme 12.

Le dispositif 30 de traitement représenté à la figure 2 comporte plus particulièrement une roue 34 de transport qui est montée rotative autour d'un axe "B" d'orientation axiale. La roue 34 de transport comporte à sa périphérie des encoches dont chacune forme un organe 32 individuel de transport. Comme représenté à la figure 3, chaque encoche présente des dimensions adaptées pour que la collerette 18 d'une préforme 12 soit posée sur le pourtour de l'encoche. Ainsi les préformes 12 peuvent être transportées le long d'un trajet en arc de cercle lorsque la roue 34 de transport est entraînée en rotation par un moteur (non représenté) depuis une zone de chargement jusqu'à une zone de déchargement.

En variante non représentée de l'invention, chaque organe de transport est formée par une pince qui est susceptible de saisir la préforme, par exemple en pinçant la paroi cylindrique externe du col de la préforme tout en laissant le col accessible à une tige 38 de traitement comme cela sera expliqué par la suite.

Comme représenté en traits interrompus à la figure 2, chaque organe 32 de transport est associé avec un poste 36 de traitement qui est solidaire en déplacement avec ledit organe 32 de transport associé.

Le dispositif 30 de traitement comporte ici une pluralité d'organes 32 de transport dont chacun comporte un poste 36 de traitement associé pour traiter en série les préformes 12 à une cadence élevée.

Les postes 36 de traitement sont identiques dans leur structure et dans leur agencement par rapport à l'organe 32 de transport auquel ils sont associés.

Comme cela est illustré à la figure 3, chaque poste 36 de traitement comporte une tige 38 axiale de traitement qui comporte une extrémité 40 inférieure libre.

L'extrémité 40 inférieure libre de la tige 38 de traitement est destinée à être insérée axialement dans la préforme 12 en passant à travers le 16 col. A cet effet, la tige 38 de traitement est agencée axialement au droit de l'ouverture du col 16 de la préforme 12 portée par l'organe 32 de transport.

La tige 38 de traitement est montée coulissante par rapport à la roue 34 de transport entre :
- une position escamotée, comme illustrée à la figure 3, dans laquelle la tige 38 de traitement est escamotée au-dessus du corps creux transporté, ici la préforme 12, et ;
- une position étendue, comme illustrée à la figure 4, dans laquelle la tige 38 de traitement est insérée par coulissement axial vers le bas dans la préforme 12 transportée par l'organe 32 de transport.

Le coulissement de la tige 38 de traitement est guidé par un moyen de guidage, telle qu'une douille 41, qui est fixe par rapport à la roue 34 de transport.

Dans sa position escamotée, l'extrémité 40 libre de la tige 38 de traitement est agencée axialement au-dessus du col 16 de la préforme 12 de manière à permettre le chargement latéral, c'est-à-dire selon une direction orthogonale à la direction axiale, d'une nouvelle préforme sur l'organe 32 de transport, ou le déchargement latéral d'une préforme 12 déjà traitée.

Dans sa position étendue, l'extrémité libre de la tige 38 de traitement est arrêtée à une distance "D" axiale déterminée du fond de la préforme 12.

Chaque poste 36 de traitement comporte des moyens commandés de mise en mouvement de la tige 38 de traitement entre sa position escamotée et sa position étendue.

Selon les enseignements de l'invention, les moyens commandés de mise en mouvement sont formés par un actionneur 42 électrique dont l'interruption du fonctionnement est commandée par une unité 44 électronique de commande, illustrée à la figure 1, pour arrêter la tige 38 de traitement dans sa position étendue.

L'actionneur 42 électrique comporte un élément 46 statique qui est monté fixe par rapport à la roue 34 de transport, et un élément 48 mobile qui est susceptible de se déplacer axialement parallèlement à la tige 38 de traitement. L'élément 48 mobile est mu par un moteur électrique (non représenté).

L'alimentation en courant électrique du moteur électrique est commandée individuellement par l'unité 44 électronique de commande.

La tige 38 de traitement est fixée mécaniquement avec l'élément 48 mobile par l'intermédiaire d'une bride 50. Ainsi, la tige 38 de traitement est solidaire en déplacement axiale avec l'élément 48 mobile.

A titre d'exemples non limitatifs, l'actionneur 42 électrique est formé par un moteur électrique linéaire, ou par un vérin électrique tubulaire, ou encore par un moteur dit "brushless" à vis.

Par les termes "interruption commandée du fonctionnement", on comprendra que l'arrêt de la tige 38 de traitement dans sa position étendue est effectué sans contact avec une butée mécanique. En d'autres termes, l'arrêt de la tige 38 de traitement dans sa position étendue est effectué par interruption de la fourniture de courant électrique à l'actionneur 42 électrique commandé par l'unité 44 électronique de commande.

Comme représenté aux figures 3 et 4, chaque tige 38 de traitement est actionnée individuellement par un actionneur 42 électrique individuel associé. Ainsi, l'élément 48 mobile de chaque actionneur 42 électrique est lié avec une unique tige 38 de traitement associée.

En outre, chaque actionneur 42 électrique est commandé individuellement par l'unité 44 électronique de commande. En d'autres termes, chaque actionneur 42 électrique est commandé indépendamment des autres actionneurs 42 électriques du dispositif.

Selon une première application de l'invention, la tige 38 de traitement porte à son extrémité 40 inférieure libre un moyen (non représenté) pour mesurer la température à l'intérieur de la préforme, par exemple un capteur de température. Ainsi, en position étendue de la tige 38 de traitement, le capteur de température est apte à mesurer la température régnant à l'intérieur de la préforme 12 à la distance "D" déterminée du fond 15 de la préforme 12.

Une telle tige 38 de traitement est notamment utilisée à la sortie de la station 20 de chauffage pour vérifier que les préformes 12 ont bien été chauffées à une température de consigne.

En variante, la tige de traitement est en plus arrêtée dans au moins une position intermédiaire entre sa position escamotée et sa position étendue pour pouvoir mesurer la température régnant à l'intérieur de la préforme à une deuxième distance du fond de la préforme qui est supérieure à la distance déterminée.

Selon une deuxième application de l'invention, la tige 38 de traitement est formée par une buse qui comporte à son extrémité 40 inférieure libre au moins un orifice d'injection d'un fluide, par exemple un gaz. La tige 38 de traitement est ainsi apte à injecter le fluide dans la préforme 12 lorsqu'elle occupe sa position étendue.

Une telle tige 38 de traitement est susceptible d'être utilisée pour refroidir certaines portions de la paroi de la préforme 12 à sa sortie de la station 20 de chauffage. Ceci permet notamment de créer un profil de chauffe déterminé du corps 14 de la préforme 12, c'est-à-dire que le corps 14 de la préforme 12 n'est pas chauffé de manière homogène. Ainsi, il est possible de favoriser la déformation des parties plus chaude de la préforme 12 lors de l'opération de formage, tandis que les parties plus froides de la préforme 12 sont moins déformées. Un tel procédé, dit "de chauffe préférentielle", permet d'obtenir des récipients finaux présentant une forme complexe.

Pour cette application, les jets de fluide peuvent être orientés radialement par rapport à l'axe de la préforme 12. Cette utilisation requiert un positionnement précis de la tige 38 de traitement en position étendue par rapport au fond 15 de la préforme 12 afin que le profil de chauffe de la préforme 12 soit maîtrisé.

Selon une troisième application de l'invention, la tige de traitement comporte des moyens d'émission d'un rayonnement électromagnétique stérilisant, par exemple des diodes électroluminescentes émettant un rayonnement ultraviolet. De tels moyens d'émission sont par exemple agencés à l'extrémité 40 libre de la tige 38 de traitement.

Un traitement de stérilisation effectué avec une telle tige 38 de traitement est d'autant plus efficace que les moyens d'émission du rayonnement sont agencés à proximité de la portion de paroi de préforme 12 à stériliser. En effet, il est connu que l'intensité du rayonnement électromagnétique diminue comme le carré de la distance entre la source d'émission et la paroi à stériliser. Ainsi, la stérilisation du fond 15 de la préforme 12 sera effective d'autant plus rapidement que l'extrémité 40 libre de la tige 38 de traitement en sera proche.

Il faut toutefois prendre garde à ce que l'extrémité de la tige 38 de traitement ne vienne pas en contact avec le fond 15 de la préforme 12 au risque d'endommager la préforme 12 et/ou les moyens d'émission du rayonnement.

Les trois applications précédemment décrites requièrent un positionnement précis de la tige 38 de traitement en position étendue de manière que l'extrémité 40 libre de la tige 38 de traitement soit arrêtée précisément à la distance "D" déterminée du fond 15 de la préforme 12.

Cependant, on a constaté qu'à l'issue de leur chauffage par la station 20 de chauffage, les préformes 12 en matériau thermoplastique, et notamment en polyéthylène téréphtalate, subissent un retrait. Ce retrait se traduit notamment par une diminution de la hauteur axiale de la préforme 12 pouvant aller jusqu'à plusieurs millimètres. Pour un lot de préformes 12 identiques avant leur chauffage, la diminution de hauteur de chaque préforme 12 est disparate.

Par conséquent, la position étendue de la tige 38 de traitement doit être définie individuellement pour chacune des préformes 12 afin que la distance "D" déterminée entre l'extrémité 40 libre de la tige 38 de traitement et le fond 15 de la préforme 12 soit précisément respectée pour chacune des préformes 12.

A cet effet, le dispositif 30 de traitement comporte des moyens d'asservissement de la course de coulissement de la tige 38 de traitement jusqu'à sa position étendue en fonction de la position du fond 15 de la préforme 12 dans l'organe 32 de transport afin que, dans sa position étendue, l'extrémité 40 libre de la tige 38 de traitement soit arrêtée à la distance "D" déterminée du fond 15 de la préforme 12 quelle que soit la dimension axiale de la préforme 12. Ainsi, la course de coulissement de la tige 38 de traitement depuis sa position escamotée jusqu'à sa position étendue est adaptée à la taille réelle de la préforme 12 associée.

La position escamotée de la tige 38 de traitement est fixée de manière identique, quelle que soit la préforme 12 chargé sur l'organe 32 de transport correspondant, tandis que la position étendue est susceptible de changer en fonction des dimensions réelles de la préforme 12 chargé sur l'organe 32 de transport correspondant.

Selon l'invention, les moyens d'asservissement comportent des moyens 52 de mesure de la hauteur axiale de ladite préforme 12. Les moyens 52 de mesure sont agencés de manière à mesurer la hauteur de la préforme 12 avant que la tige 38 de traitement n'y soit insérée.

La hauteur de la préforme 12 est ici définie comme la dimension axiale entre la collerette 18 et la face extérieure 17 du cul 13.

Les moyens 52 de mesure sont aptes à communiquer le résultat de la mesure de hauteur de la préforme 12 à destination de l'unité 44 électronique de commande.

Dans l'exemple représenté à la figure 1, les moyens 52 de mesure sont agencés de manière à mesurer la hauteur des préformes 12 avant leur chargement sur les organes 32 de transport.

En variante, les moyens de mesure sont agencés de manière à mesurer la hauteur des préformes après leur chargement sur les organes de transport. Les moyens de mesure sont par exemple embarqués sur la roue de transport.

Dans l'exemple représenté à la figure 5, la préforme 12 est portée par un organe 54 de préhension similaire à l'organe de transport du dispositif 30 de traitement. L'organe 54 de préhension se déplace dans un plan de référence connu permettant de connaître la position précise de la collerette 18 de la préforme 12.

Les moyens 52 de mesure sont ici formés par des cellules 56 optoélectroniques fonctionnant selon un mode dit "mode barrage" ou "through beam". Les cellules 56 sont agencées de manière fixe le long du trajet des préformes 12, en une colonne, un pas déterminé séparant deux cellules 56 adjacentes. Chaque cellule 56 est agencé à une distance axiale déterminée de la collerette 18 de la préforme 12.

Les cellules 56 optoélectronique sont agencées de manière à émettre un rayonnement radial par rapport à l'axe de la préforme 12 dans un plan d'émission.

Lorsque la préforme 12 coupe le plan d'émission, elle coupe certains rayons émis par des cellules 56 supérieures, tandis que d'autres rayons émis par des cellules 56 inférieures passent sous le cul 13 de la préforme 12. Chaque cellule 56 comporte des moyens pour détecter si son rayon a été coupé par la préforme 12.

Il est possible d'en déduire la hauteur de la préforme 12 avec une précision égale au pas déterminé entre deux cellules 56.

En variante non représentée de l'invention, les moyens de mesure sont formés par un capteur fixe à balayage laser qui permet de mesurer la hauteur de la préforme, ou tout autre moyen de mesure agencé fixe le long du trajet, ou embarqué sur la roue.

La position du fond 15 est déduite de cette mesure de hauteur en prenant en compte l'épaisseur du cul 13 de la préforme 12. En combinant la mesure de la hauteur totale de la préforme 12 et la mesure de l'épaisseur du cul 13 de la préforme 12, l'unité 44 électronique de commande est apte à déterminer la position précise du fond 15 de la préforme par rapport à la roue 34 de transport en connaissant la position précise de la collerette 18 de la préforme 12.

L'épaisseur du cul 13 de la préforme 12 est par exemple mesuré sur une seule préforme 12 du lot. En effet, l'épaisseur du 13 varie très peu relativement à la diminution de hauteur totale de la préforme 12. L'épaisseur mesurée est ainsi suffisamment précise pour être appliquée à chaque préforme 12.

En variante, les moyens de mesure comportent aussi un capteur qui est apte à mesurer l'épaisseur du cul de la préforme. Il s'agit par exemple d'un capteur confocal ou d'un capteur interférométrique. Selon d'autres variantes non représentées de l'invention, tout autre moyen connu de mesure sans contact de la position du fond de la préforme par rapport à son extrémité supérieure peut être utilisé.

On décrit à présent un procédé de traitement en série des préformes 12 à l'issue d'une opération préalable de chauffage de desdites préforme 12 par la station 20 de chauffage. Durant ce procédé toutes les préformes 12 sont successivement traitée par les différents poste 36 de traitement.

Le procédé de traitement comporte des étapes "E1" successive de traitement individuel de chaque préforme 12 par le dispositif 30 de traitement réalisé selon la premier mode de réalisation de l'invention.

Le dispositif 30 de traitement comportant plusieurs postes 36 identiques de traitement, chaque préforme 12 est traitée par l'un des postes 36 de traitement.

Lors de chaque étape "E1" de traitement, la tige 38 de traitement est insérée dans la préforme 12 chargé dans l'organe 32 de transport associé jusqu'à sa position étendue. La course de la tige 38 de traitement est adaptée à ladite préforme par les moyens d'asservissement pour que l'extrémité 40 libre de la tige 38 de traitement soit arrêtée à la distance "D" déterminée du fond de ladite préforme 12.

Le dispositif 30 de traitement réalisé selon les enseignements de l'invention permet ainsi une course adaptative de la tige 38 d'actionnement en fonction de la hauteur de chaque préforme 12.

Pour permettre l'asservissement de la course de la tige 38 de traitement, le procédé comporte aussi des étapes "E0" successives de mesure de la hauteur de chaque préforme 12 chaude.

Chaque étape "E0" de mesure d'une préforme intervient avant le début de l'étape "E1" de traitement de ladite préforme 12 pour permettre à l'unité 44 électronique de commande d'arrêter la tige 38 de traitement à la distance déterminée du fond 15 de ladite préforme 12.

A cet effet, les moyens 56 de mesure communiquent à l'unité 44 électronique de commande les résultats de la mesure de ladite préforme 12 afin d'interrompre le fonctionnement de l'actionneur 42 électrique lorsque l'extrémité 40 libre de la tige 38 de traitement est à la distance "D" déterminée du fond 15 de ladite préforme 12.

L'application du procédé de traitement par le dispositif 30 représenté à la figure 1 commence après qu'une préforme 12 soit sortie de la station 20 de chauffage, une mesure de sa hauteur est effectuée par les moyens 54 de mesure lors de l'étape "E0" préalable de mesure.

Puis, ladite préforme 12 est chargée sur l'un des organes 32 de transport de la roue 34 de transport. La tige 38 de traitement occupe alors sa position escamotée.

L'étape "E1" de traitement de ladite préforme 12 est alors déclenchée. L'unité 44 électronique active le fonctionnement de l'actionneur 42 électrique afin de faire coulisser la tige 38 de traitement vers sa position étendue.

En fonction de la mesure de la hauteur de la préforme 12 effectuée lors de l'étape "E0" préalable de mesure, l'unité 44 électronique de commande interrompt le fonctionnement de l'actionneur 42 électrique pour arrêter le coulissement de la tige 38 de coulissement lorsque son extrémité 40 libre arrive précisément à la distance "D" déterminée du fond 15 de la préforme 12.

A l'issue du traitement de la préforme 12 par la tige 38 de traitement, l'unité 44 électronique de commande active de nouveau le fonctionnement de l'actionneur 42 électrique pour faire coulisser la tige 38 de traitement jusqu'à sa position escamotée.

Ce procédé est réitéré individuellement pour chacune des préformes 12 sortant de la station 20 de chauffage.

Selon un deuxième mode de réalisation de l'invention représenté à la figure 6, les moyens 52 d'asservissement comportent des moyens 58 de détection qui permettent de détecter lorsque l'extrémité 40 libre de la tige 38 de traitement est à la distance "D" déterminée du fond 15 de la préforme 12. Ces moyens 58 de détection sont embarqués sur la tige 38 de traitement.

Les moyens 58 de détection sont aptes à communiquer à l'unité 44 électronique de commande un signal avertissant que l'extrémité 40 libre de la tige 38 de traitement est à la distance "D" déterminée du fond 15 de la préforme 12.

Les moyens 58 de détection sont par exemple formés par un capteur capacitif adapté à la distance déterminée "D" à mesurer. Le capteur est alors agencé sur la tige 38 de traitement, à proximité de son extrémité 40 libre.

En variante, la détection de la distance entre l'extrémité libre de la tige de traitement et le fond de la préforme est formée par un sonar, ou un radar, ou tout autre dispositif apte à mesurer une distance sans contact entre l'extrémité libre de la tige de traitement et le fond de la préforme, et susceptible d'être embarqué sur la tige de traitement.

Le procédé de mise en œuvre du dispositif 30 de traitement selon le deuxième mode de réalisation de l'invention est similaire à celui du premier mode de réalisation de l'invention. Seules les différences seront décrites par la suite, le reste du procédé demeurant identique.

Ce procédé ne comporte pas d'étape préalable de mesure.

En revanche, chaque étape "E1" de traitement d'une préforme 12 comporte une opération de détection du fond 15 de ladite préforme 12 qui est réalisée pendant le coulissement de la tige 38 de traitement par les moyens 58 de détection.

Ainsi, en fonction de la mesure effectuée, l'unité 44 de commande arrête la tige 38 de traitement à la distance "D" déterminée du fond 15 de ladite préforme 12 en interrompant le fonctionnement de l'actionneur 42 électrique.

Le dispositif 30 de traitement réalisé selon l'une quelconque des modes de réalisation de l'invention permet ainsi d'adapter la course de coulissement de la tige 38 de traitement individuellement pour chaque préforme 12. Ceci permet notamment de traiter plus efficacement et plus rapidement les préformes 12 tout en évitant d'endommager les préformes 12 et/ou les tiges 38 de traitement.

Le procédé mettant en œuvre le dispositif 30 de traitement permet avantageusement d'adapter la course de coulissement de la tige 38 de traitement à chaque préforme 12 chaude, prenant en compte le retrait aléatoire provoqué par le chauffage des préformes 12.

Le dispositif de traitement décrit précédemment est aussi susceptible d'être agencé en amont de la station de chauffage. Le dispositif de traitement est ainsi susceptible d'adapter la course de coulissement de chaque tige de traitement en cas d'anomalie dimensionnelle dans un lot de préformes. Ceci permet d'éviter d'endommager la tige de traitement par contact avec le fond du préforme plus courte que les autres.

## Revendications

1. Dispositif (30) de traitement en série de corps creux en matériau thermoplastique, notamment de préformes (12) en matériau thermoplastique, comportant :
- au moins un organe (32) individuel de transport d'un corps creux ;
- au moins une tige (38) de traitement qui est associée audit organe (32) de transport, la tige (38) de traitement étant montée coulissante axialement par rapport à l'organe (32) de transport ;
- des moyens commandés de mise en mouvement de chaque tige (38) de traitement entre une position escamotée dans laquelle la tige (38) de traitement est escamotée au-dessus du corps creux transporté par l'organe (32) de transport, et une position étendue dans laquelle la tige (38) de traitement est destinée à être insérée axialement dans le corps creux transporté en passant à travers un col (16) dudit corps creux ;
**caractérisé en ce que** les moyens commandés sont formés par un actionneur (42) électrique, l'interruption commandée du fonctionnement de l'actionneur (42) électrique étant commandée individuellement par une unité (44) électronique de commande pour arrêter la tige (38) de traitement associée dans sa position étendue ; et **en ce qu'**il comporte des moyens d'asservissement de la course de coulissement de la tige (38) de traitement jusqu'à sa position étendue afin que, dans sa position étendue, une extrémité (40) libre de la tige (38) de traitement soit arrêtée à une distance (D) axiale déterminée d'un fond (15) du corps creux quelle que soit la dimension axiale du corps creux, les moyens d'asservissement comportant des moyens (52) de mesure de la hauteur axiale dudit corps creux, le dispositif comportant une pluralité d'organes (32) de transport dont chacun est associé avec une tige (38) de traitement, chaque tige (38) de traitement étant mise individuellement en mouvement par un actionneur (42) électrique individuel associé.

2. Dispositif (30) de traitement selon la revendication précédente, **caractérisé en ce que** la tige (38) de traitement comporte des moyens (58) pour détecter lorsque son extrémité (40) libre est à la distance (D) déterminée du fond (15) de la préforme (12).

3. Dispositif (30) de traitement selon la revendication 1 ou 2, **caractérisé en ce que** la tige (30) de traitement est formée par une buse destinée à injecter un fluide dans le corps creux.

4. Dispositif (30) de traitement selon la revendication 1 ou 2, **caractérisé en ce que** la tige (30) de traitement porte à son extrémité inférieure un moyen pour mesurer la température.

5. Dispositif (30) de traitement selon la revendication 1 ou 2, **caractérisé en ce que** la tige (30) de traitement comporte des moyens d'émission d'un rayonnement électromagnétique stérilisant, par exemple des diodes électroluminescentes émettant un rayonnement ultraviolet.

6. Procédé de traitement en série de préformes (12) en matériau thermoplastique à l'issue d'une opération préalable de chauffage des préformes (12), le procédé mettant en œuvre le dispositif (30) de traitement selon l'une quelconque des revendications 1 à 5,
**caractérisé en ce qu'**il comporte des étapes (E1) de traitement individuel de chaque préforme (12) par insertion de la tige (38) de traitement dans chaque préforme (12) jusqu'à sa position étendue, la course de la tige (38) de traitement étant adaptée à chacune des préformes (12) par les moyens d'asservissement pour que l'extrémité (40) libre de la tige (38) de traitement soit arrêtée à la distance (D) déterminée du fond (15) de la préforme (12).

7. Procédé selon la revendication précédente, **caractérisé en ce qu'**il comporte des étapes (E1) préalables de mesure de la hauteur de chaque préforme (12) chaude, chaque étape (E0) préalable de mesure d'une préforme (12) intervenant avant le début de l'étape (E1) de traitement de ladite préforme (12) pour permettre à l'unité (44) électronique de commande d'arrêter la tige (38) de traitement à la distance (D) déterminée du fond (15) de ladite préforme (12).

8. Procédé selon la revendication 6, **caractérisé en ce que** chaque étape (E1) de traitement comporte une opération de détection du fond (15) de ladite préforme (12) qui est réalisée pendant le coulissement de la tige (38) de traitement vers sa position étendue pour permettre à l'unité (44) électronique de commande d'arrêter la tige (38) de traitement à la distance (D) déterminée du fond (15) de ladite préforme (12).

## Patentansprüche

1. Vorrichtung (30) zur seriellen Behandlung von Hohlkörpern aus thermoplastischem Material, insbesondere Vorformlingen (12) aus thermoplastischem Material, aufweisend:
- mindestens ein einzelnes Element (32) zum Transport eines Hohlkörpers;
- mindestens eine Behandlungsstange (38), die mit dem Transportelement (32) in Verbindung steht, wobei die Behandlungsstange (38) bezogen auf das Transportelement (32) axial gleitend gelagert ist;
- gesteuerte Mittel zum Inbewegungversetzen jeder Behandlungsstange (38) zwischen einer eingefahrenen Position, in der die Behandlungsstange (38) über dem Hohlkörper, der von dem Transportelement (32) transportiert wird, eingefahren ist, und einer ausgefahrenen Position, in der die Behandlungsstange (38) dazu bestimmt ist, axial in den transportierten Hohlkörper durch einen Hals (16) des Hohlkörpers eingeführt zu sein;
**dadurch gekennzeichnet, dass** die gesteuerten Mittel von einem elektrischen Betätigungselement (42) gebildet sind, wobei die gesteuerte Unterbrechung des Betriebs des elektrischen Betätigungselements (42) einzeln von einer elektronischen Steuereinheit (44) gesteuert wird, um die zugehörige Behandlungsstange (38) in ihrer ausgefahrenen Position anzuhalten; und dadurch, dass sie Mittel zur Regelung des Gleitwegs der Behandlungsstange (38) bis zu ihrer ausgefahrenen Position aufweist, damit in ihrer ausgefahrenen Position ein freies Ende (40) der Behandlungsstange (38) in einem bestimmten axialen Abstand (D) zu einem Boden (15) des Hohlkörpers angehalten wird, ganz gleich, welche axiale Abmessung der Hohlkörper aufweist, wobei die Mittel zur Regelung Mittel (52) zur Messung der axialen Höhe des Hohlkörpers aufweisen, wobei die Vorrichtung mehrere Transportelemente (32) aufweist, von denen jedes mit einer Behandlungsstange (38) in Verbindung steht, wobei jede Behandlungsstange (38) von einem zugehörigen einzelnen elektrischen Betätigungselement (42) einzeln in Bewegung versetzt wird.

2. Vorrichtung (30) zur Behandlung nach dem vorhergehenden Anspruch, **dadurch gekennzeichnet, dass** die Behandlungsstange (38) Mittel (58) zum Erfassen aufweist, wenn sich ihr freies Ende (40) in dem bestimmten Abstand (D) zum Boden (15) des Vorformlings (12) befindet.

3. Vorrichtung (30) zur Behandlung nach Anspruch 1 oder 2, **dadurch gekennzeichnet, dass** die Behandlungsstange (30) von einer Düse gebildet ist, die dazu bestimmt ist, ein Fluid in den Hohlkörper einzuspritzen.

4. Vorrichtung (30) zur Behandlung nach Anspruch 1 oder 2, **dadurch gekennzeichnet, dass** die Behandlungsstange (30) an ihrem unteren Ende ein Mittel zur Messung der Temperatur trägt.

5. Vorrichtung (30) zur Behandlung nach Anspruch 1 oder 2, **dadurch gekennzeichnet, dass** die Behandlungsstange (30) Mittel zur Emission einer sterilisierenden elektromagnetischen Strahlung aufweist, zum Beispiel Leuchtdioden, die eine ultraviolette Strahlung emittieren.

6. Verfahren zur seriellen Behandlung von Vorformlingen (12) aus thermoplastischem Material nach einem vorhergehenden Arbeitsgang des Erhitzens der Vorformlinge (12), wobei das Verfahren die Vorrichtung (30) zur Behandlung nach einem der Ansprüche 1 bis 5 einsetzt,
**dadurch gekennzeichnet, dass** es Schritte (E1) des einzelnen Behandelns jedes Vorformlings (12) durch Einführen der Behandlungsstange (38) in jeden Vorformling (12) bis in ihre ausgefahrene Position aufweist, wobei der Weg der Behandlungsstange (38) durch die Mittel zur Regelung an jeden der Vorformlinge (12) angepasst ist, damit das freie Ende (40) der Behandlungsstange (38) in dem bestimmten axialen Abstand (D) zum Boden (15) des Vorformlings (12) angehalten wird.

7. Verfahren nach dem vorhergehenden Anspruch, **dadurch gekennzeichnet, dass** es vorhergehende Schritte (E1) des Messens der Höhe jedes heißen Vorformlings (12) aufweist, wobei jeder vorhergehende Schritt (E0) des Messens eines Vorformlings (12) vor dem Beginn des Schritts (E1) des Behandelns des Vorformlings (12) erfolgt, um es der elektronischen Steuereinheit (44) zu gestatten, die Behandlungsstange (38) in dem bestimmten Abstand (D) zum Boden (15) des Vorformlings (12) anzuhalten.

8. Verfahren nach Anspruch 6, **dadurch gekennzeichnet, dass** jeder Schritt (E1) des Behandelns einen Arbeitsgang des Erfassens des Bodens (15) des Vorformlings (12) aufweist, der während des Gleitens der Behandlungsstange (38) in Richtung ihrer ausgefahrenen Position ausgeführt wird, um es der elektronischen Steuereinheit (44) zu gestatten, die Behandlungsstange (38) in dem bestimmten Abstand (D) zum Boden (15) des Vorformlings (12) anzuhalten.

## Claims

1. Device (30) for serially treating hollow bodies made of thermoplastic material, in particular preforms (12) made of thermoplastic material, comprising:
- at least one individual member (32) for transporting a hollow body;
- at least one treatment rod (38) which is associated with said transport member (32), the treatment rod (38) being slidingly mounted axially relative to the transport member (32);
- control means for moving each treatment rod (38) between a retracted position in which the treatment rod (38) is retracted above the hollow body transported by the transport member (32), and an extended position in which the treatment rod (38) is intended to be inserted axially into the transported hollow body by passing through a neck (16) of said hollow body;
**characterized in that** the control means are formed by an electric actuator (42), the controlled switching of the operation of the electric actuator (42) being controlled individually by an electronic control unit (44) to stop the associated treatment rod (38) in its extended position; and **in that** it comprises means for servocontrolling the sliding travel of the treatment rod (38) to its extended position so that, in its extended position, a free end (40) of the treatment rod (38) is stopped at a determined axial distance (D) from a bottom (15) of the hollow body regardless of the axial dimension of the hollow body, the servocontrol means comprising means (52) for measuring the axial height of said hollow body, the device comprising a plurality of transport members (32), each of which is associated with a treatment rod (38), each treatment rod (38) being individually moved by an associated individual electric actuator (42).

2. Treatment device (30) according to the preceding claim, **characterized in that** the treatment rod (38) comprises means (58) for detecting when its free end (40) is at the determined distance (D) from the bottom (15) of the preform (12).

3. Treatment device (30) according to Claim 1 or 2, **characterized in that** the treatment rod (30) is formed by a nozzle intended to inject a fluid into the hollow body.

4. Treatment device (30) according to Claim 1 or 2, **characterized in that** the treatment rod (30) bears, at its bottom end, a means for measuring the temperature.

5. Treatment device (30) according to Claim 1 or 2, **characterized in that** the treatment rod (30) comprises means for emitting a sterilizing electromagnetic radiation, for example light-emitting diodes emitting an ultraviolet radiation.

6. Method for serially treating preforms (12) made of thermoplastic material at the end of a prior operation of heating of the preforms (12), the method implementing the treatment device (30) according to any one of Claims 1 to 5,
**characterized in that** it comprises steps (E1) of individual treatment of each preform (12) by the insertion of the treatment rod (38) into each preform (12) to its extended position, the travel of the treatment rod (38) being adapted to each of the preforms (12) by the servocontrol means so that the free end (40) of the treatment rod (38) is stopped at the determined distance (D) from the bottom (15) of the preform (12).

7. Method according to the preceding claim, **characterized in that** it comprises preliminary steps (E1) of measuring the height of each hot preform (12), each preliminary step (E0) of measuring a preform (12) taking place before the start of the step (E1) of treatment of said preform (12) to allow the electronic control unit (44) to stop the treatment rod (38) at the determined distance (D) from the bottom (15) of said preform (12).

8. Method according to Claim 6, **characterized in that** each step (E1) of treatment comprises an operation of detection of the bottom (15) of said preform (12) which is performed during the sliding of the treatment rod (38) to its extended position to allow the electronic control unit (44) to stop the treatment rod (38) at the determined distance (D) from the bottom (15) of said preform (12).
